Europäisches Patentamt

European Patent Office

Office européen des brevets

(19)

(11) Veröffentlichungsnummer : **0 447 415 B1**

(12)                         **EUROPÄISCHE PATENTSCHRIFT**

(45) Veröffentlichungstag der Patentschrift :
**11.08.93 Patentblatt 93/32**

(21) Anmeldenummer : **89913053.8**

(22) Anmeldetag : **25.11.89**

(86) Internationale Anmeldenummer :
**PCT/DE89/00737**

(87) Internationale Veröffentlichungsnummer :
**WO 90/06492 14.06.90 Gazette 90/14**

(51) Int. Cl.⁵ : **G01D 1/02,** B60R 21/00

(54) **VERFAHREN ZUR AUSWERTUNG EINES SENSORSIGNALS.**

(30) Priorität : **07.12.88 DE 3841089**

(43) Veröffentlichungstag der Anmeldung :
**25.09.91 Patentblatt 91/39**

(45) Bekanntmachung des Hinweises auf die
Patenterteilung :
**11.08.93 Patentblatt 93/32**

(84) Benannte Vertragsstaaten :
**DE FR GB SE**

(56) Entgegenhaltungen :
**EP-A- 0 064 888
EP-A- 0 327 853
GB-A- 2 068 532
US-A- 3 976 860**

(73) Patentinhaber : **ROBERT BOSCH GMBH
Postfach 30 02 20
W-7000 Stuttgart 30 (DE)**

(72) Erfinder : **DROBNY, Wolfgang
Flurweg 5
W-7122 Besigheim (DE)**
Erfinder : **NITSCHKE, Werner
Rossegger Weg 14
W-7257 Ditzingen 1 (DE)**
Erfinder : **TAUFER, Peter
Talstrasse 45
W-7253 Renningen 2 (DE)**
Erfinder : **WELLER, Hugo
Mörikestrasse 5
W-7141 Oberriexingen (DE)**

**Beschreibung**

Stand der Technik

Die Erfindung geht aus von einem Verfahren zur Auswertung eines Sensorsignals nach der Gattung des Anspruchs 1. Aus der Literaturstelle 1141 Ingenieurs de l'Automobile (1982) No. 6, 69-77 ist ein gattungsgleiches Verfahren bekannt, bei dem das integrierte Ausgangssignal eines Sensors mit einem Schwellwert verglichen wird. Überschreitet das Ausgangssignal des Sensors den vorgegebenen Schwellwert, dann werden Rückhaltemittel, wie Airbag und/oder Gurtstraffer zum Schutz von Insassen ausgelöst. Bei herkömmlichen Verfahren besteht der Nachteil, daß die Sensoren in einem sehr aufwendigen Verfahren abgeglichen werden müssen. Zudem kann sich während der Lebensdauer des Fahrzeugs, beispielsweise durch Temperatureinflüsse und/oder Alterungsvorgänge bei Bauelementen, der einmal herbeigeführte Abgleich wieder verändern.

Vorteile der Erfindung

Das erfindungsgemäße Verfahren mit den Merkmalen des Anspruchs 1 hat den Vorteil, daß aufwendige Abgleicharbeiten bei der Herstellung des Sensors und dessen Einbau in ein Steuergerät entfallen können und daß weiter später eintretende Änderungen in Form von Temperaturschwankungen und/oder Alterungsvorgängen bei Bauelementen sich nicht nachteilig auf die Auswertung der Sensorsignale auswirken können.

Durch die in den abhängigen Ansprüchen aufgeführten Merkmale sind vorteilhafte Weiterbildungen und Ausgestaltungen des in Anspruch 1 genannten Verfahrens möglich. Weiter werden in den abhängigen Ansprüchen zur Durchführung des Verfahrens geeignete Einrichtungen beschrieben.

Zeichnung

Ausführungsbeispiele der Erfindung sind in der Zeichnung dargestellt und in der nachfolgenden Beschreibung näher erläutert. Es zeigen Figur 1 ein erstes Diagramm mit Darstellung eines Sensorsignals als Funktion der Zeit, Figur 2 ein zweites Diagramm mit Darstellung eines Sensorsignals als Funktion der Zeit, Figur 3 ein Blockschaltbild eines ersten Ausführungsbeispiels einer Einrichtung zur Durchführung des erfindungsgemäßen Verfahrens und Figur 4 ein Blockschaltbild einer zweiten Einrichtung.

Beschreibung der Ausführungsbeispiele

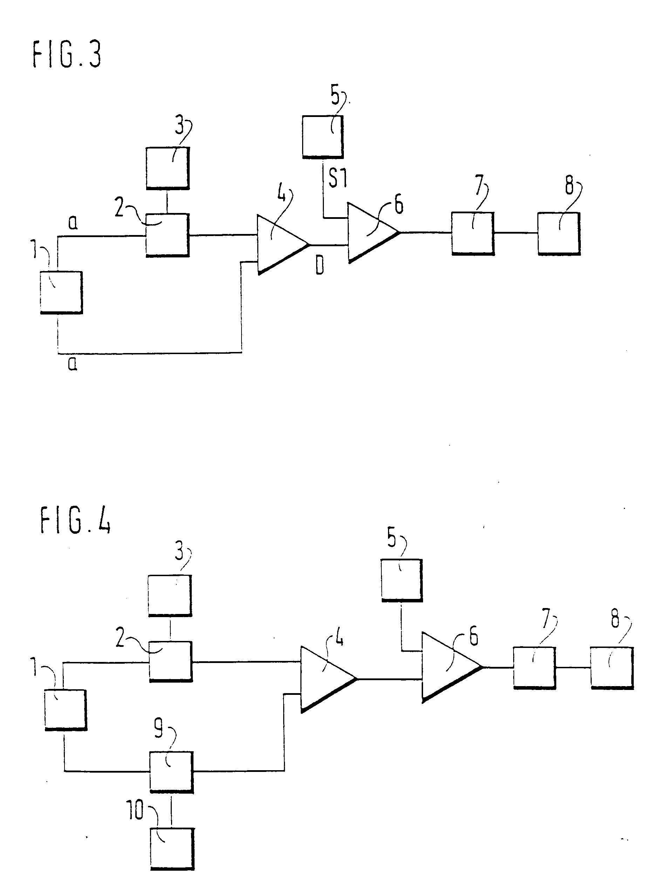

Eine Einrichtung zur Durchführung des erfindungsgemäßen Verfahrens umfaßt gemäß einem ersten Ausführungsbeispiel nach Figur 3 einen Sensor 1 mit mehreren Ausgängen für sein Ausgangssignal. Ein erster Ausgang des Sensors 1 ist mit dem Eingangsanschluß eines Mittelwertbildners 2 verbunden, dessen Ausgangsanschluß mit dem ersten Eingangsanschluß einer ersten Vergleichsschaltung 4 verbunden ist. Ein zweiter Ausgang des Sensors 1 ist unmittelbar mit einem zweiten Eingangsanschluß der ersten Vergleichsschaltung 4 verbunden. Mit dem Mittelwertbildner 2 ist weiter eine Zählschaltung 3 verbunden. Der Ausgangsanschluß der ersten Vergleichsschaltung 4 ist mit einem ersten Eingangsanschluß einer zweiten Vergleichsschaltung 6 verbunden. Ein zweiter Eingangsanschluß der zweiten Vergleichsschaltung 6 ist mit dem Ausgangsanschluß einer Referenzspannungsquelle 5 verbunden. Der Ausgangsanschluß der zweiten Vergleichsschaltung 6 ist mit dem Eingang einer Auswerteschaltung verbunden, deren Ausgang seinerseits mit dem Eingangsanschluß von Rückhaltemitteln 8 verbunden ist.

Ein zweites Ausführungsbeispiel einer Einrichtung zur Durchführung des erfindungsgemäßen Verfahrens gemäß Figur 4 unterscheidet sich von dem in Figur 3 dargestellten Ausführungsbeispiel noch dadurch, daß auch der zweite Ausgang des Sensors 1 nicht unmittelbar mit einem Eingangsanschluß einer ersten Vergleichsschaltung 4 verbunden ist, sondern mit dem Eingangsanschluß eines zweiten Mittelwertbildners 9, dessen Ausgangsanschluß mit dem zweiten Eingangsanschluß der ersten Vergleichsschaltung verbunden ist. Zusätzlich ist mit dem zweiten Mittelwertbildner 9 eine zweite Zählschaltung 10 verbunden.

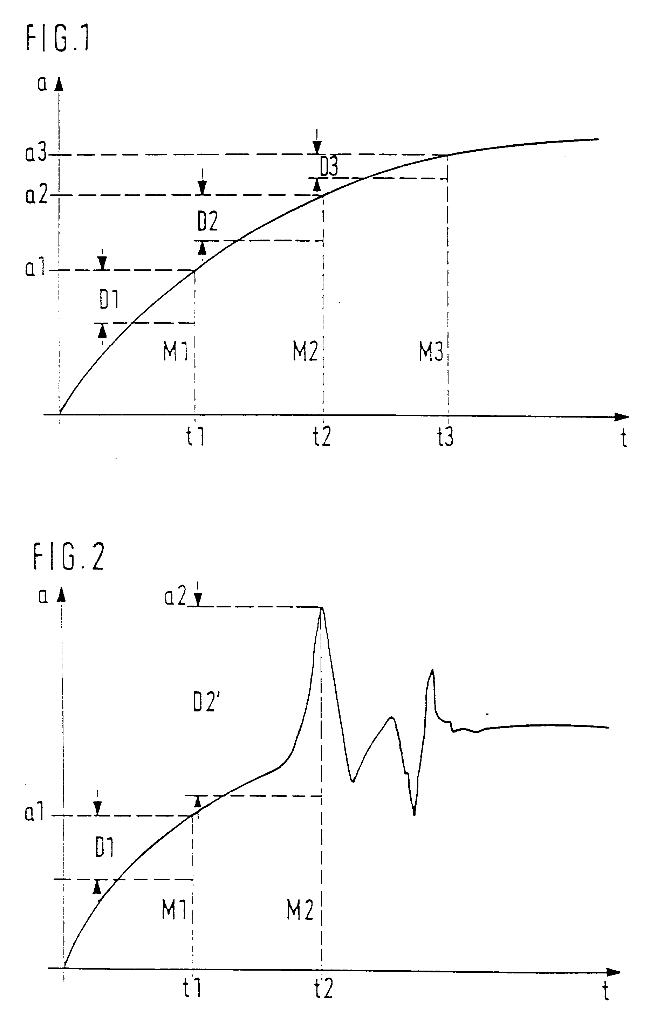

Das erfindungsgemäße Verfahren wird im Folgenden auch unter Bezugnahme auf die in Figur 1 und Figur 2 dargestellten Diagramme erläutert. Figur 1 zeigt in einer idealisierten Darstellung das Ausgangssignal a des Sensors 1 als Funktion der Zeit t. Bei dem Sensor 1 handelt es sich vorzugsweise um einen beschleunigungsempfindlichen Sensor, beispielsweise einen Piezokristall, der ein der Fahrzeugbeschleunigung proportionales Ausgangssignal abgibt. Von dem Ausgangssignal des Sensors 1 werden von dem ersten Mittelwertbildner 2 in vorgebbaren Zeitintervallen Ti zwecks Bildung eines Mittelwertes M gemäß der nachfolgenden Formel

$$(1) \qquad M = \frac{1}{n} \sum_{i=1}^{n} a_i$$

n Meßwerte $a_i$ mit $i=1-n$ abgegriffen, summiert und durch die Anzahl der Meßwerte geteilt. Mittels der den ersten Mittelwertbildner 2 steuernden Zählschaltung 3 kann dabei die Anzahl der abzugreifenden Meßwerte $a_i$ vorgegeben werden. Der im ersten Mittelwertbildner 2 aus den einzelnen Meßwerten $a_i$ gebildete Mittelwert M wird sodann einem ersten Eingangsanschluß einer ersten Vergleichsschaltung 4 zugeführt, deren zweiter Eingangsanschluß unmittelbar mit einem Ausgang des Sensors 1 verbunden ist. In der ersten Vergleichsschaltung 4 wird gemäß nachfolgender Formel

$$(2) \qquad D = |a_n - M|$$

ein Differenzsignal D gebildet, das vom Ausgangsanschluß der ersten Vergleichsschaltung 4 einem ersten Eingangsanschluß einer zweiten Vergleichsschaltung 6 zugeführt wird. Einem zweiten Eingangsanschluß der zweiten Vergleichsschaltung 6 wird ein Referenzspannungswert von einer Referenzspannungsquelle 5 zugeleitet. In dieser zweiten Vergleichsschaltung 6 wird das Differenzsignal D mit einem vorgegebenen Schwellwert S1 (gemäß nachfolgender Formel (3))

$$(3) \qquad D \gtrless S1$$

verglichen. Solange der Vergleich ergibt, daß das Differenzsignal D unterhalb der vorgegebenen Schwelle S1 liegt, wird der Mittelwert M als aktualisierter Mittelwert MA angenommen. Ergibt jedoch der Vergleich, daß der Wert des Differenzsignals D größer als der vorgegebene Schwellwert S1 ist, dann wird der vorhergehende Wert M als aktualisiertes Mittelwert MA angenommen. Aus der Darstellung gemäß Figur 1 geht hervor, daß zu zeitlich aufeinanderfolgenden Zeitpunkten t1, t2, t3 Meßwerte a1, a2, a3 des Ausgangssignals des Sensors 1 abgegriffen werden. Diese Meßwerte a1, a2, a3 werden einerseits jeweils dem Mittelwertbildner 2 und andererseits unmittelbar der ersten Vergleichsschaltung 4 zugeführt. In der ersten Vergleichsschaltung 4 werden die Meßwerte a1, a2, a3 mit jeweils aktualisierten Mittelwerten M1, M2, M3 verglichen, und es wird die Differenz D1, D2, D3 gebildet. Die Differenzbildung zwischen dem Mittelwert M1 und dem Meßwert a1, der zum Zeitpunkt T1 gewonnen worden ist, ergibt einen vergleichsweise großen Differenzsignalwert, der gemäß Vergleich in der zweiten Vergleichsstufe 6, also beim Vergleich mit dem vorgegebenden Schwellwert S1, diesen Schwellwert S1 überschreibet. Demzufolge wird der Mittelwert M1 nicht berücksichtigt sondern ein zeitlich zuvor gewonnener Mittelwert M als Mittelwert M beibehalten. Das gleiche gilt für den dargestellten Differenzwert D2. Erst der Differenzwert D3 liegt unter dem vorgegebenen Schwellwert S1 und es wird demzufolge M3 als aktualisierter Mittelwert MA weitergeführt.

Zweckmäßig werden die Mittelwerte M aus einer Anzahl von Meßwerten $a_i$ des Sensorsignals a gebildet, die einer Potenz von 2 entsprechen, vorzugsweise liegt die Anzahl innerhalb der Grenzen von 100 bis etwa 300, insbesondere bei 256 Meßwerten.

Das Diagramm gemäß Figur 2 zeigt, im Vergleich zu der idealisierten Darstellung gemäß Figur 1, eine realitätsnähere Darstellung der Kurvenverlaufs des Ausgangssignals des Sensors 1. Erkennbar sind relativ starke Amplitudenschwankungen um eine gedachte Schwerpunktlinie des idealisierten Kurvenverlaufs. Wenn, wie zum Zeitpunkt t2 dargestellt, gerade bei einem extremen Amplitudenanstieg nach dem vorgebenen Zeittakt ein Meßwert a2 gewonnen wird, weicht dieser außerordentlich stark von einem zeitlich vorher oder zeitlich später gewonnenen Meßwert $a_i$ ab und kann bei der weiteren Verarbeitung des Signals das erwartete Ergebnis stark verfälschen. Um diese nachteilige Wirkung von Amplitudenschwankungen zu unterdrücken, wird in einem weiteren Ausführungsbeipiel des erfindungsgemäßen Verfahrens der Vergleich des Mittelwerts M zur Gewinnung des Differenzsignals D nicht nur mit einem einzigen Meßwert des Ausgangssignals a des Sensors 1 durchgeführt sondern mit einem Mittelwert mehrerer Meßwerte dieses Ausgangssignals.

Zweckmäßig wird dazu eine Anzahl von Meßwerten des Ausgangssignals a des Sensors 1 verarbeitet, die einer Potenz von 2 entspricht. Insbesondere werden 4 bis 16, vorzugsweise 8 Meßwerte des Sensorsignals a für eine Mittelwertbildung zusammengefaßt. Diese zweite Mittelwertbildung wird durch eine Einrichtung gemäß Figur 4 durchgeführt, indem das Ausgangssignal a des Sensors 1 zusätzlich einem zweiten Mittelwertbildner 9 zugeführt wird, der von einem Zähler 10 gesteuert wird, der die Anzahl der zu verarbeitenden Meßwerte für die Mittelwertbildung vorgibt.

## Patentansprüche

1. Verfahren zur Auswertung eines Sensorsignals in Verbindung mit der Auslösung von Rückhaltemitteln in Fahrzeugen, wobei die Auslösung der Rückhaltemittel in Abhängigkeit von integrierten und mit Schwellwerten verglichenen Sensorsignalen eines beschleunigungsempfindlichen Sensors erfolgt, dadurch gekennzeichnet, daß aus einer Mehrzahl von zeitlich aufeinanderfolgenden Meßwerten des Sensorsignals (a) ein Mittelwert (M) gebildet wird, daß ein Differenzwert (D) zwischen diesem Mittelwert (M) und mindestens einem zeitlich folgenden Meßwert (ai) des Sensorsignals (a) gebildet wird, daß der Differenzwert in einer Vergleichsschaltung (6) mit einem vorgegebenen Schwellwert (S1) verglichen wird, daß der Mittelwert (M) als aktualisierter Mittelwert (MA), gesetzt wird, wenn der Differenzwert (D) zwischen dem Mittelwert (M) und dem mindestens einen zeitlich folgenden Meßwert des Sensorsignals (a) den vorgegebenen ersten Schwellwert (S1) unterschreitet und daß das Ausgangssignal der Vergleichsschaltung (6) einer Auswerteschaltung (7) zugeführt ist, deren Ausgang mit dem Eingangsanschluß von Rückhaltemitteln (8) verbunden ist.

2. Verfahren nach Anspruch 1, dadurch gekennzeichnet, daß der Mittelwert (M) aus einer Anzahl von Meßwerten des Sensorsignals gebildet wird, die einer Potenz von 2 entspricht.

3. Verfahren nach einem der Ansprüche 1 und 2, dadurch gekennzeichnet, daß der Mittelwert (M) aus einer Anzahl zwischen 100 bis 300, vorzugsweise aus 256 Meßwerten des Sensorsignals gebildet wird.

4. Verfahren nach einem der Ansprüche 1 bis 3, dadurch gekennzeichnet, daß eine Differenz zwischen dem Mittelwert (M) und einem zweiten Mittelwert einer Mehrzahl von Meßwerten des Sensorsignals (a) gebildet wird.

5. Verfahren nach einem der Ansprüche 1 bis 4, dadurch gekennzeichnet, daß der zweite Mittelwert aus 4 bis 16, vorzugsweise aus 8 Meßwerten des Sensorsignals (a) gebildet wird.

6. Einrichtung zur Durchführung des Verfahrens nach einem der Ansprüche 1 bis 5, dadurch gekennzeichnet, daß die Einrichtung einen Sensor (1) mit mehreren Ausganssignalanschlüssen umfaßt, wobei ein erster Ausgangsanschluß des Sensors (1) mit dem Eingangsanschluß eines Mittelwertbildners (2) verbunden wird, dessen Ausgangsanschluß wiederum mit dem ersten Eingangsanschluß einer ersten Vergleichsschaltung (4) verbunden ist, und wobei ein zweiter Ausgangsanschluß des Sensors (1) unmittelbar mit einem zweiten Eingangsanschluß der ersten Vergleichsschaltung (4) verbunden ist, wobei weiterhin der Ausgangsanschluß der ersten Vergleichsschaltung (4) mit einem ersten Eingangsanschluß der zweiten Vergleichsschaltung (6) verbunden ist, und wobei ein zweiter Eingangsanschluß der zweiten Vergleichsschaltung (6) mit einer Referenzspannungsquelle verbunden ist, wobei weiterhin eine Auswerteschaltung (7) vorgesehen ist, deren Eingangsanschluß mit dem Ausgangsanschluß der zweiten Vergleichsschaltung (6) verbunden ist und deren Ausgangsanschluß mit dem Eingangsanschluß von Rückhaltemitteln (8) verbunden ist.

## Claims

1. Method for evaluating a sensor signal in conjunction with the triggering of restraining means in vehicles, the triggering of the restraining means taking place as a function of integrated sensor signals of an acceleration-sensitive sensor, which signals are compared with threshold values, characterised in that an average value (M) is formed from a multiplicity of chronologically successive measured values of the sensor signal (a), in that a differential value (D) is formed between this average value (M) and at least one chronologically following measured value (ai) of the sensor signal (a), in that the differential value is compared in a comparison circuit (6) with a predetermined threshold value (S1), in that the average value (M) is set as an updated average value (MA) if the differential value (D) between the average value (M) and the at least one chronologically following measured value of the sensor signal (a) falls below the predetermined first threshold value (S1), and in that the output signal of the comparison circuit (6) is fed to an evaluation circuit (7) whose output is connected to the input terminal of restraining means (8).

2. Method according to Claim 1, characterised in that the average value (M) is formed from a number of measured values of the sensor signal which corresponds to a power of 2.

3. Method according to one of Claims 1 and 2, characterised in that the average value (M) is formed from a number between 100 and 300, preferably from 256 measured values of the sensor signal.

4. Method according to one of Claims 1 to 3, characterised in that a difference is formed between the average value (M) and a second average value of a multiplicity of measured values of the sensor signal (a).

5. Method according to one of Claims 1 to 4, characterised in that the second average value is formed from 4 to 16, preferably from 8 measured values of the sensor signal (a).

6. Device for carrying out the method according to one of Claims 1 to 5, characterised in that the device comprises a sensor (1) with a plurality of output signal terminals, a first output terminal of the sensor (1) being connected to the input terminal of an average value former (2) whose output terminal is connected in turn to the first input terminal of a first comparison circuit (4), and a second output terminal of the sensor (1) being directly connected to a second input terminal of the first comparison circuit (4), furthermore the output terminal of the first comparison circuit (4) being connected to a first input terminal of the second comparison circuit (6), and a second input terminal of the second comparison circuit (6) being connected to a reference voltage source, furthermore an evaluation circuit (7) being provided whose input terminal is connected to the output terminal of the second comparison circuit (6) and whose output terminal is connected to the input terminal of restraining means (8).

## Revendications

1. Procédé d'évaluation ou d'exploitation d'un signal de capteur en liaison avec le déclenchement de moyens de retenue équipant des véhicules automobiles, le déclenchement de ces moyens de retenue se faisant en fonction de signaux de capteur intégrés comparés à des seuils, signaux fournis par un capteur sensible à l'accélération, procédé caractérisé en ce qu'à partir de plusieurs mesures du signal de capteur (a), se suivant dans le temps, on forme une valeur moyenne (M), on forme une différence (D) entre cette valeur moyenne (M) et au moins une mesure (ai) suivante dans le temps du signal de capteur (a), on compare cette différence dans un comparateur (6) à une valeur de seuil (S1) prédéterminée, on pose la valeur moyenne (M) comme valeur moyenne actualisée (MA) si la différence (D) entre cette valeur moyenne (M) et au moins une mesure suivante du signal de capteur (a) est inférieure à un premier seuil (S1) prédéterminé et on applique le signal de sortie du comparateur (6) à un circuit d'exploitation (7) dont la sortie est reliée à la borne d'entrée des moyens de retenue (8).

2. Procédé selon la revendication 1, caractérisé en ce qu'on forme la valeur moyenne (M) à partir d'un nombre de mesures du signal de capteur qui correspond à une puissance de (2).

3. Procédé selon l'une des revendications 1 et 2, caractérisé en ce qu'on forme la valeur moyenne (M) d'un nombre de mesures du signal de capteur compris entre 100 et 300 et de préférence avec 256 mesures.

4. Procédé selon l'une des revendications 1 à 3, caractérisé en ce qu'on forme une différence entre la valeur moyenne (M) et une seconde valeur moyenne correspondant à plusieurs mesures du signal de capteur (a).

5. Procédé selon l'une des revendications 1 à 4, caractérisé en ce qu'on forme la seconde valeur moyenne à partir de 4 à 16 et de préférence 8 mesures du signal de capteur (a).

6. Installation pour la mise en oeuvre du procédé selon l'une des revendications 1 à 5, caractérisé en ce qu'elle comprend un capteur (1) à plusieurs bornes de sortie de signal, une première borne de sortie du capteur (1) étant reliée à une borne d'entrée d'un générateur de valeur moyenne (2) dont la borne de sortie est reliée à une première borne d'entrée d'un premier comparateur (4), une seconde borne de sortie du capteur (1) étant reliée directement à une seconde borne d'entrée du premier comparateur (4), et en outre la borne de sortie du premier comparateur (4) est reliée à une première borne d'entrée du second comparateur (6), une seconde borne d'entrée du second comparateur (6) étant reliée à une source de tension de référence, et en outre, il est prévu un circuit d'exploitation ou d'évaluation (7) dont la borne d'entrée est reliée à la borne de sortie du second comparateur (6) et dont la borne de sortie est reliée à la borne d'entrée des moyens de retenue (8).

FIG.1

FIG.2

FIG.3

FIG.4